# EUROPÄISCHE PATENTSCHRIFT

(11) **EP 0 596 217 B1**
(45) Veröffentlichungstag und Bekanntmachung des Hinweises auf die Patenterteilung: **08.05.1996**
(21) Anmeldenummer: 93114375.4
(22) Anmeldetag: 08.09.1993
(51) Int. Cl.: C09K 17/00

(54) **Agglomerate zur Kultivierung von Rohböden**
Agglomerates for cultivating raw soils
Agglomerats pour culture sur sols bruts

(30) Priorität: 06.11.1992 DE 4237503
(43) Veröffentlichungstag der Anmeldung: 11.05.1994
(73) Patentinhaber: HÜLS AKTIENGESELLSCHAFT, D-45764 Marl (DE)
(72) Erfinder: Hausberg, Egbert, D-46514 Schermbeck (DE)

(56) Entgegenhaltungen:
- EP-A- 0 072 213
- EP-A- 0 475 433
- EP-A- 0 495 108
- FR-A- 2 635 333
- US-A- 5 120 344

## Beschreibung

Die Erfindung betrifft Agglomerate zur Kultivierung von Rohböden, insbesondere von Böschungen, Deponien, ariden Gebieten wie auch Golfbahnen sowie zur Begrünung Von Extremstandorten, wie Flach- und Schrägdächer.

Es ist bekannt, den Wasserhaushalt von Böden dadurch zu regulieren, in dem man Wasserretentionsmittel einarbeitet. Dazu verwendet man die sogenannten Superabsorber, die unter Bildung eines Hydrogels ein vielfaches ihres Eigengewichts an Wasser aufnehmen können. Eine weitere Eigenschaft dieser Superabsorber, die speziell zum o. g. Zweck verwendet werden, besteht darin, daß das gespeicherte Wasser pflanzenverfügbar ist, d. h. aufgrund der Saugkräfte der in das Gel eingedrungenen Pflanzenwurzeln wird dem Gel das Wasser entzogen.

Ein generelles Problem ist es, die benötigte relativ geringe Menge der Superabsorber homogen und gleichmäßig verteilt in den Boden zu verteilen.

Der Stand der Technik beschreibt dazu u. a. die Herstellung und Anwendung von Gelen auf Basis von Tonmineralen und wasserlöslichen Superabsorbern (EP-A 0 335 653) oder anderen polymeren Stoffzusammensetzungen auf Basis von Superabsorbern (WO 91/11410). Die Herstellung solcher Gele ist jedoch äußerst aufwendig. Gemäß EP-A 0 335 653 müssen die Gele vor der Anwendung in einem weiteren Herstellungsschritt aktiviert werden. Auch können diese nicht problemlos zum Endverbraucher gelangen aufgrund des hohen Gewichts der wasserhaltigen Gele.

Die Herstellung von Gelen aus Trockenmassen, bestehend aus Superabsorber und mineralischen Stoffen, ist ebenfalls nicht einfach durchzuführen.

Ein weiteres Problem ist das Einbringen dieser mehr oder weniger zähen, gelartigen Massen in den zu bearbeitenden Boden.

Es ist auch bekannt, wasserunlösliche synthetische Polymerisate auf Kunstfaservliese zu fixieren und diese als Bodenverbesserer einzusetzen (High Perfom. Text. June 1990, S. 6 - 7).

Es bestand daher die Aufgabe, ein Wasserretentionssystem auf der Basis von Superabsorbern bereitzustellen, das zum einen relativ einfach in die zu regulierenden Böden ein- oder aufzubringen, zum anderen einfacher herstellbar ist.

Weiterhin bestand die Aufgabe, ein leichtes und problemlos zu transportierendes Wasserretentionssystem zu finden.

Die Aufgabe wird durch das erfindungsgemäße gasdurchlässige, flüssigkeitsaufnehmende und -speichernde Agglomerat, im wesentlichen enthaltend
A) ein mineralisches Trägermaterial,
B) ein flüssigkeitaufnehmendes und -speicherndes wasserunlösliches Polymerisat
C) ein Klebemittel und
D) gegebenenfalls Zusatz- und Hilfsstoffe
gelöst.

Es war überraschend, mit dem bevorzugt verwendeten Klebemittel auf Basis von bei Raumtemperatur flüssigen Polybutadienölen eine ausgezeichnete Bindung zwischen dem mineralischen Trägermaterial A) und dem flüssigkeitsaufnehmenden und -speichernden wasserunlöslichen Polymerisat B) zu erhalten ohne deren Eigenschaften hinsichtlich Porösität und Aufnahme von wachstumsbeeinflussenden Stoffen (A) bzw. Wasseraufnahme (B) durch Verkleben negativ zu beeinträchtigen.

Als mineralisches Trägermaterial eignen sich prinzipiell natürliches Material wie z. B. Blähton, Schiefer, Quarz, Bentonit, Lava, Leichtbeton, Perlite, Bims und Schlacke sowie künstlich hergestellte Granulate mit einem Teilchendurchmesser von 1 bis 8 mm.

Bevorzugt wird ein Blähton als Trägermaterial (z. B. LECATON®, Fa. Leca, Pinneberg, Germany) eingesetzt, da dieser besonders gut in der Lage ist, die unter D) genannten Zusatz- und Hilfsstoffe zu speichern. So kann das mineralische Trägermaterial mittels einer Nährlösung unter anderem mit Bakterien, Mykorrhiza-Pilzen, Fungiziden, Herbiziden, Pestiziden, Pilzkulturen und anderen Zusatzstoffen, wie z. B. natürliche und künstliche Düngemittel sowie Nährstoffe und Substanzen zum Einstellen des pH-Wertes angereichert werden.

Als flüssigkeitsaufnehmendes und -speicherndes wasserunlösliches Polymerisat sind die sogenannten synthetischen Superabsorber generell geeignet, wie z. B. Poly(meth)acrylsäure, Poly(meth)acrylsäureamid, Acrylsäureamid-Acrylsäure-Copolymere.

Bevorzugt eingesetzt werden jedoch Acryl säure-Acrylsäureamid-Copolymerisate (z. B. STOCKOSORB®, Fa. Stockhausen, Krefeld, Deutschland). Der Korndurchmesser des auf dem mineralischen Träger fixierten Superabsorber liegt im Bereich von 0,2 bis 1,0 mm (Mittelkorn). Diese Korngröße ist besonders bevorzugt, da nach Wasseraufnahme eine bestimmte kritische Größe der Teilchen existieren muß, die es den Pflanzenwurzeln ermöglicht, in diese zum Zwecke der Wasseraufnahme einzudringen.

Die Menge an fixiertem Superabsorber kann anwendungspezifisch über einen Bereich von 1 bis 5 Gew.-%, bezogen auf die Summe der Komponenten A) und C) betragen.

Als Klebemittel können allgemein solche Stoffe eingesetzt werden, die beim Klebevorgang die Eigenschaften der Komponenten A) und B) nicht negativ beeinträchtigen, d. h. die Gasdurchlässigkeit und die poröse Struktur des mineralischen Trägers sowie die Fähigkeit des Superabsorbers, Wasser relativ schnell aufzunehmen und zu speichern, müssen im wesentlichen erhalten bleiben. Dazu zählen alle wasseremulgierbaren Polymere, wie z. B. Polybutadien, Polyacrylate, Copolymere des Styrol etc.

Als besonders vorteilhaftes Klebemittel wurden erfindungsgemäß solche auf Basis von bei Raumtemperatur flüssigen Polybutadienölen gefunden. Die Herstellung dieser Polybutadienöle ist bekannt.

Vorzugsweise werden niedrigviskose, stereospezifische vornehmlich cis-1,4-Polybutadienöle verwendet, deren cis-1,4-Gehalt in einem Bereich von 70 % und höher liegt und einen 1,2-Vinyl-Gehalt von weniger als 1,5 % aufweisen.

Die mittelbare Molmasse der im Sinne der Erfindung geeigneten stereospezifischen niedrigviskosen Polybutadienöle variiert von ca. 1800 bis 3000 g/mol und die Viskosität bei 20 °C liegt je nach Molmasse im Bereich von 700 bis 330 mPa s. Die Dichte der verwendeten Polybutadienöle beträgt 0.90 bis 0.92 g/m³.

Das Klebemittel wird in einer Menge von 1 bis 5 Gew.-% bezogen auf 100 Gew.-% des mineralischen Trägers A), bevorzugt von 1 bis 3 Gew.-%, eingesetzt.

Die Polybutadienöle können rein, d. h. mit einem Feststoffgehalt von größer 99 Massen-% oder in wäßriger Emulsion mit einem variablem Feststoffgehalt von 25 bis 50 Massen-% als Klebemittel zur Anwendung kommen.

Das Polybutadienöl kann die im Stand der Technik bekannten Verarbeitungs- und Hilfsstoffe enthalten wie z. B. Sikkative, Netzmittel, Entschäumer und Wasser .

Die erfindungsgemäßen Agglomerate können so hergestellt werden, in dem man die Komponente A) in einem Teller- oder Zwangsmischer mit der Komponente C) bei einer Temperatur von 20 °C versetzt und 2 - 5 Minuten intensiv vermengt. Danach erfolgt die Zugabe der Komponente B) und mischt weitere 1 - 4 Minuten.

Polybutadienöl kann auch als wäßrige Emulsion verwendet werden. Die Herstellung erfolgt analog. Anschließend wird das Wasser entfernt und daß Agglomerat bei 80 °C in einem Trockenofen getrocknet.

Weitere Herstellungsverfahren sind das Sprühverfahren oder die Verwendung von Mehrkomponenten-Estrichmaschinen vor Ort, z. B. bei Dachbegrünungen.

Die Zusatz- und Hilfsstoffe werden üblicherweise vor der Herstellung des Agglomerats durch Impfen des porösen Trägermaterials eingebracht.

Die erfindungsgemäßen Agglomerate zeichnen sich dadurch aus, daß sie große Mengen Flüssigkeiten, z. B. Regenwasser, in relativ kurzer Zeit speichern können und über einen längeren Zeitraum kontinuierlich an die Umgebung wieder abgeben. Darunter ist auch die Abgabe des Wassers an Pflanzen zu verstehen, die mit ihrem Wurzelwerk in das Agglomerat bzw. direkt in das wasserlösliche Polymerisat eingedrungen sind. Der o.g. Vorgang kann sich bis zu 20 - 30 mal wiederholen, ohne daß die regulierende Wirkung wesentlich nachläßt, ist aber auch abhängig von der Bodenstruktur und -beschaffenheit.

Weiterhin werden die Zusatz- und Hilfsstoffe langsam über einen längeren Zeitraum aus dem mineralischen Träger an die Umgebung abgegeben. Das Agglomerat hat demnach eine Art Depotwirkung hinsichtlich Wasserhaushalt und Pflanzenwachstumsmitteln. Es eignet sich deshalb besonders gut zur Kultivierung von sogenannten Rohböden. Darunter versteht man insbesondere die Vorbereitung zur großflächigen Begrünung von Böschungen, Deponien, ariden Gebieten sowie auch Golfbahnen.

Ein großer Fortschritt der erfindungsgemäßen Agglomerate ist ihr sehr geringes Trockengewicht. Dies ist vorteilhaft für Verpackung, Transport und Lagerung. Bedenkt man, daß die Wasseraufnahme der Superabsorber mit einem erheblichem Gewichtszuwachs verbunden ist, so stellt sich für bestimmte Verwendungszwecke, z. B. Dachbegrünungen, der Vorteil gegenüber dem Stand der Technik deutlich heraus.

Die erfindungsgemäßen Agglomerate eignen sich zur Kultivierung von Rohböden jeder Art, insbesondere aber auch für Böschungen, kontaminierte Böden (Deponien, Industriegebiet), aride Gebiete, Golfbahnen, Stubstrate für Balkon- und Kübelpflanzen, Bepflanzung von Lärmschutzwänden, Drainagen im Sportplatzbau, wie auch zur Begrünung von Flach- und Schrägdächern.

## Patentansprüche

1. Gasdurchlässiges, flüssigkeitsaufnehmendes und -speicherndes Agglomerat im wesentlichen enthaltend
A) ein mineralisches Trägermaterial,
B) ein flüssigkeitaufnehmendes und -speicherndes wasserunlösliches Polymerisat
C) ein Klebemittel und
D) gegebenenfalls Zusatz- und Hilfsstoffe.

2. Agglomerat nach Anspruch 1,
dadurch gekennzeichnet,
daß das mineralische Trägermaterial A) aus Blähton, Schiefer, Quarz, Bentonit, Lava, Leichtbeton, Perlite, Bims oder Schlacke sowie künstlich hergestellte Granulate mit einem Teilchendurchmesser von 1 bis 8 mm besteht.

3. Agglomerat nach den Ansprüchen 1 bis 2,
dadurch gekennzeichnet,
daß das Polymerisat B) Poly(meth)acrylsäure, Poly(meth)acrylsäureamid, Acrylsäure-Acrylsäureamid-Copolymere oder Mischungen derselben enthält.

4. Agglomerat nach den Ansprüchen 1 bis 3,
dadurch gekennzeichnet,
daß das Polymerisat B) Acrylsäure-Acrylsäureamid-Copolymere enthält.

5. Agglomerat nach den Ansprüchen 1 bis 4,
dadurch gekennzeichnet,
daß das Klebemittel ein stereospezifisches niedrigviskoses Polybutadienöl enthält.

6. Agglomerat nach den Ansprüchen 1 bis 5,
dadurch gekennzeichnet,
daß als Zusatz- und Hilfsstoffe Bakterien, Mykorrhiza-Pilze, Fungizide, Herbizide, Pestizide, Pilzkulturen, natürliche und künstliche Düngemittel, Nährstoffe sowie Substanzen zum Einstellen des pH-Werts enthalten sind.

7. Verfahren zur Herstellung von gasdurchlässigen, flüssigkeitsaufnehmenden und -speichernden Agglomeraten,
dadurch gekennzeichnet,
daß sie im wesentlichen
A) ein mineralisches Trägermaterial,
B) ein flüssigkeitsaufnehmendes und -speicherndes wasserunlösliches Polymerisat
C) ein Klebemittel und
D) gegebenenfalls Zusatz- und Hilfsstoffe
gemäß den Ansprüchen 1 bis 6 enthalten, wobei die Komponenten A) und B) mit dem Klebemittel C) in Mischaggregaten bei Umgebungstemperatur fest verbunden werden und deren Eigenschaften erhalten bleiben.

8. Verwendung der Agglomerate gemäß den Ansprüchen 1 bis 6 zur Kultivierung von Rohböden.

9. Verwendung gemäß Anspruch 8 zur Kultivierung von Böschungen, Deponien, Dachbegrünung, ariden Gebieten und Golfbahnen.

10. Verwendung gemäß Anspruch 8 als Substrate für Balkon- und Kübelpflanzen, zur Bepflanzung von Lärmschutzwänden und zur Begrünung von Flach- und Schrägdächern sowie als Drainagen im Sportplatzbau.

## Claims

1. Gas-permeable, liquid-absorbing and liquid-storing agglomerate essentially containing
A) a mineral carrier material,
B) a liquid-absorbing and liquid-storing water-insoluble polymer,
C) an adhesive and
D) optionally, additives and auxiliaries.

2. Agglomerate according to Claim 1, characterized in that the mineral carrier material A) is composed of foamclay, slate, quartz, bentonite, lava, light concrete, perlites, pumice or slag, and artificially prepared granular material having a particle diameter of 1 to 8 mm.

3. Agglomerate according to Claims 1 to 2, characterized in that the polymer B) contains poly(meth)acrylic acid, poly(meth)acrylamide, acrylic acid/acrylamide copolymers or mixtures of the same.

4. Agglomerate according to Claims 1 to 3, characterized in that the polymer B) contains acrylic acid/acrylamide copolymers.

5. Agglomerate according to Claims 1 to 4, characterized in that the adhesive contains a stereospecific, low-viscosity polybutadiene oil.

6. Agglomerate according to Claims 1 to 5, characterized in that it contains, as additives and auxiliaries, bacteria, mycorrhiza fungi, fungicides, herbicides, pesticides, fungal cultures, natural and artificial fertilizers, nutrients and substances for adjusting the pH.

7. Process for the preparation of gas-permeable, liquid-absorbing and liquid-storing agglomerates, characterized they essentially contain
A) a mineral carrier material,
B) a liquid-absorbing and liquid-storing water-insoluble polymer,
C) an adhesive and
D) optionally, additives and auxiliaries in accordance with Claims 1 to 6, the components A) and B) being firmly joined by the adhesive C) in mixed aggregates at ambient temperature and their properties remaining intact.

8. Use of the agglomerates in accordance with Claims 1 to 6 for the cultivation of virgin soils.

9. Use in accordance with Claim 8 for the cultivation of embankments, waste-disposal sites, roof vegetation cover, arid regions and golf courses.

10. Use in accordance with Claim 8 as substrates for balcony and tub plants, for the planting of noise protection walls and for the coverage with vegetation of flat and sloping roofs, and as drainage systems in the construction of sports fields.

## Revendications

1. Agglomérat perméable aux gaz, absorbant et emmagasinant du liquide, composé essentiellement:
A) d'un matériau de support minéral,
B) d'un polymérisat insoluble dans l'eau absorbant et emmagasinant du liquide ,
C) un adhésif et,
D) éventuellement des adjuvants et substances auxiliaires.

2. Agglomérat selon la revendication 1, caractérisé en ce que :
le matériau de support minéral A) est composé d'argile expansée, de schiste, de quartz, de bentonite, de lave, de béton léger, de perlite, de ponce ou de scorie ainsi que de granulats produits artificiellement avec un diamètre de particules de 1 à 8 mm.

3. Agglomérat selon les revendications 1 et 2, caractérisé en ce que :
le polymérisat B) contient de l'acide poly(méth)acrylique, de l'amide d'acide polyméthacrylique, des copolymères d'acide acrylique et d'amide d'acide acrylique ou de mélanges des mêmes.

4. Agglomérat selon les revendications 1 à 3, caractérisé en ce que :
le polymérisat B) contient des copolymères d'acide acrylique et d'amide d'acide acrylique.

5. Agglomérat selon les revendications 1 à 4, caractérisé en ce que :
l'adhésif contient une huile de polybutadiène à basse viscosité stéréospécifique.

6. Agglomérat selon les revendications 1 à 5, caractérisé en ce que :
comme adjuvants et matières auxiliaires sont contenues des bactéries, des champignons Mykorriza, des fongicides, des herbicides, des pesticides, des cultures de champignons, des substances fertilisantes naturelles et synthétiques, ainsi que des substances pour l'ajustage de la vapeur du pH.

7. Procédé pour la préparation des agglomérats perméables aux gaz, absorbants et emmagasinants du liquide caractérisé en ce qu'ils contiennent essentiellement selon les revendications 1 à 6 :
A) un matériau de support minéral,
B) un polymérisat insoluble dans l'eau absorbant et emmagasinant du liquide,
C) un adhésif et,
D) éventuellement des adjuvants et substances auxiliaires,
tandis que les composants A) et B) sont solidement liés à l'adhésif C) dans des agrégats mixtes à la température environnante et leurs propriétés restent maintenues.

8. Utilisation des agglomérats selon les revendications 1 à 6 pour la culture de sols bruts.

9. Utilisation selon la revendication 8 pour la culture de talus, dépôts de déchets, gazonnement de toits, zones arides et pistes de golf.

10. Utilisation selon la revendication 8, comme substrats pour des plantes de balcon ou d'auge, pour l'implantation de murs antibruit et pour le gazonnement de toits plats et inclinés ainsi que comme drainages dans la construction d'emplacements sportifs.
